# EUROPEAN PATENT SPECIFICATION

(11) **EP 2 639 865 B1**
(45) Date of publication and mention of the grant of the patent: **20.04.2016**
(21) Application number: 12190729.9
(22) Date of filing: 31.10.2012
(51) Int. Cl.: H01M 4/131, H01M 4/36, H01M 4/505, H01M 4/58, B82Y 30/00, C01G 45/12, C01G 45/00, C01G 53/00, H01M 4/02

(54) **Positive active material, method of preparing the same, and lithium secondary battery using the same**
Positives Aktivmaterial, Verfahren zu seiner Herstellung und Lithiumsekundärbatterie damit
Matériau actif positif, procédé de préparation associé et batterie secondaire au lithium l'utilisant

(30) Priority: 13.03.2012 KR 20120025740
(43) Date of publication of application: 18.09.2013
(73) Proprietor: Samsung SDI Co., Ltd., Yongin-si, Gyeonggi-do (KR)
(72) Inventor: Cho, Hae In, Chungcheongnam-Do 336-841 (KR); Jo, Sung Nim, Chungcheongnam-Do 336-841 (KR); Shim, Jae Ha, Chungcheongnam-Do 336-841 (KR); Shim, Hyung Cheoul, Chungcheongnam-Do 336-841 (KR); Yoon, Dong Myung, Chungcheongnam-Do 336-841 (KR)
(74) Representative: Gulde & Partner

(56) References cited:
- JP-A- 2001 319 653
- US-A- 5 759 720
- D. LIU ET AL: "Effect of nano LiFePO4 coating on LiMn1.5Ni0.5O4 5V cathode for lithium ion batteries", JOURNAL OF POWER SOURCES, vol. 204, 20 November 2011 (2011-11-20), pages 127-132, XP055055794, ISSN: 0378-7753, DOI: 10.1016/j.jpowsour.2011.11.059
- M.M THACKERAY ET AL: "ZrO2- and Li2ZrO3-stabilized spinel and layered electrodes for lithium batteries", ELECTROCHEMISTRY COMMUNICATIONS, vol. 5, no. 9, 1 September 2003 (2003-09-01), pages 752-758, XP055055811, ISSN: 1388-2481, DOI: 10.1016/S1388-2481(03)00179-6
- LIU ET AL: "Surface modification by ZnO coating for improving the elevated temperature performance of LiMn2O4", JOURNAL OF ALLOYS AND COMPOUNDS, ELSEVIER SEQUOIA, LAUSANNE, CH, vol. 436, no. 1-2, 10 April 2007 (2007-04-10), pages 387-391, XP022025210, ISSN: 0925-8388, DOI: 10.1016/J.JALLCOM.2006.07.058
- Li Wang ET AL: "Investigation of SnO2-modified LiMn2O4 composite as cathode material for lithium-ion batteries", International Journal of Electrochemical Science, 10 August 2010 (2010-08-10), pages 1113-1126, XP055055806, www.electrochemsci.org Retrieved from the Internet: URL:http://www.electrochemsci.org/papers/v ol5/5081113.pdf [retrieved on 2013-03-08]
- JIANG Q L ET AL: "Synthesis and characterization of phosphate-modified LiMn2O4 cathode materials for Li-ion battery", CHINESE CHEMICAL LETTERS, ELSEVIER LTD, GB, vol. 21, no. 11, 1 November 2010 (2010-11-01), pages 1382-1386, XP027375463, ISSN: 1001-8417 [retrieved on 2010-09-30]
- KIM ET AL: "Synthesis of lithium manganese phosphate nanoparticle and its properties", JOURNAL OF PHYSICS AND CHEMISTRY OF SOLIDS, PERGAMON PRESS, LONDON, GB, vol. 68, no. 5-6, 1 May 2007 (2007-05-01), pages 1203-1206, XP022122228, ISSN: 0022-3697

## Description

### Description of the Related Art

As applications of lithium secondary batteries are gradually extending from power sources for small-sized electric/electronic devices to power sources and power storage for large-sized electric/electronic devices such as electric vehicles, there is an increasing demand for a positive active material for a secondary battery having improved properties including high safety, long cycle life, high energy density and high power capability.

Lithium cobalt oxides, lithium manganese oxides, lithium composite oxides may be used as the positive active material. Specifically, spinel lithium manganese oxides are less costly than other materials and are environmentally friendly and highly safe because they do not include heavy metals, such as cobalt. Owing to the advantages, the spinel lithium manganese oxides are extending their applications to power supply sources and power storage for environmentally friendly electric vehicles or hybrid electric vehicles.

However, using the spinel lithium manganese oxide as the positive active material is considered problematic because when the battery is used under a high temperature condition for a long time, the lifetime of battery is rapidly reduced due to electrolyte decomposition by elution of manganese ions at high temperature and the remaining capacity of battery is sharply reduced.

The article "Effect of nano LiFePO4 coating on LiMn1.5Ni0.5O4 5V cathode for lithium ion batteries" by Liu et al. (Journal of Power Sources 204(2012)127) is concerned with a new process for coating LiFePO₄ on lithium manganese nickel spinels. The effect of this coating in terms of surface morphology and electrochemical performance has been investigated.

M.M. Thackeray investigated the cycling stability of LiMn2O4 ("ZrO2- and Li2ZrO3-stabilized spinel and layered electrodes for lithium batteries" in Electrochemistry Communications 5 (2003) 752). It has been found that surface-treatment with ZrO₂ improves the cycling stability.

In "Surface modification by ZnO coating for improving the elevated temperature performance of LiMn2O4" (Journal of Alloys and Compounds 436 (2007) 387), Liu et al. have found that surface modification of LiMn₂O₄ with ZnO by sol-gel method improves the elevated temperature performance of LiMn₂O₄.

Wang et al. have found that SnO₂-modified LiMn₂O₄ cathode materials exhibit better cycling performance and higher capacity retention, see "Investigation of SnO2-modified LiMn2O4 composite as cathode material for lithium-ion batteries" in Int.J.Electrochem. Sci. 5 (2010) 1113:

US 5,759,720 is directed to lithium ion rechargeable batteries. The addition of specific lithium aluminum manganese oxy-fluoride electrode components improves the cycling stability and the capacity.

In JP 2001-319653 a spinel lithium manganese oxide is used as active electrode material. A high energy density and a superior characteristic of self-discharge resistance have been obtained.

Jiang et al ("Synthesis and characterization of phosphate-modified LiMn2O4 cathode materials for Li-ion battery" in Chinese Chemical Letters 21 (2010) 1382-1386) investigated LiMn₂O₄ spinel cathode materials modified with 2 wt% LiMnPO₄ by polyol synthesis method. Experiments showed that the cycling and rate capacities were significantly enhanced.

Kim et al in "Synthesis of lithium manganese phosphate nanoparticles and its properties" (Journal of Physics and Chemistry of Solids 68 (2007) 1203-1206) disclose a polyol method for synthesizing LiMnPO₄ fine particles.

Accordingly, there is a need for a positive active material for improving high- rate and cycle life characteristics of a spinel lithium manganese oxide.

### Brief Summary of the Invention

Aspects of the present invention provide a positive active material having a stable cycle characteristic at high temperature without a reduction in capacity per weight and high-rate characteristic, a method of preparing the same and a lithium secondary battery using the same.

In accordance with one aspect of the present invention, there is provided a positive active material including a spinel lithium manganese oxide surface-coated with one or more types of nanoparticles selected from olivine-type lithium metal phosphate.

The spinel lithium manganese oxide may be represented by Formula (1) :

LiMₓMn₂₋ₓO₄ (1)

wherein M is at least one selected from the group consisting of Ni, Zr, Co, Mg, Mo, Al, Ti, Cr, Gd and Ag, and 0 ≤ x < 1.

The olivine-type lithium metal phosphate is represented by Formula (3):

LiFe₍₁₊ₓ₎MnₓPO₄ (3)

wherein 0 < x < 1.

The nanoparticles may have a particle diameter of 100 nm or less.

In accordance with another aspect of the present invention, there is provided a method of preparing a positive active material, the method including preparing a spinel lithium manganese oxide represented by Formula (1) by mixing a lithium compound and a compound including at least one of M and manganese and performing heat treatment on the resultant mixture, and surface-coating the spinel lithium manganese oxide by forming a coating layer by mixing the spinel lithium manganese oxide with one or more types of nanoparticles selected from olivine-type lithium metal phosphate and metal oxide.

As described above, according to the present invention, stable surface coating can be achieved by employing a nanosized olivine-type lithium metal phosphate to a spinel lithium manganese oxide, a side reaction between a composite oxide and an electrolyte solution at high temperature can be prevented by forming the coating layer, thereby providing a lithium secondary battery having improved high-temperature cycle life characteristic and capacity per weight.

Additional aspects and/or advantages of the invention will be set forth in part in the description which follows and, in part, will be obvious from the description, or may be learned by practice of the invention.

### Brief Description of the Drawings

The objects, features and advantages of the present invention will be more apparent from the following detailed description in conjunction with the accompanying drawings, in which:
FIG. 1 is a scanning electronic microscope (SEM) view showing a surface-coated spinel lithium manganese oxide according to Reference Example 1;
FIG. 2 is a scanning electronic microscope (SEM) view showing a surface-coated spinel lithium manganese oxide according to Reference Example 2;
FIG. 3 is a scanning electronic microscope (SEM) view showing a surface-coated spinel lithium manganese oxide according to Comparative Example 1;
FIG. 4 is a graph illustrating the cycle capacity of secondary batteries including surface-coated spinel lithium manganese oxides according to Reference Examples 1 and 2;
FIG. 5 is a graph illustrating the cycle capacity of secondary batteries including surface-coated spinel lithium manganese oxides according to Reference Example 3 and Comparative Example 1; and FIG. 6 illustrates cycle capacity retention of secondary batteries including surface-coated spinel lithium manganese oxides according to Reference Examples 1 and 2 and Comparative

### Example 1.

### Detailed Description of the Invention

Hereinafter, embodiments of the present invention will be described in detail with reference to the accompanying drawings.

The present invention provides a positive active material including a spinel lithium manganese oxide surface-coated with one or more types of nanoparticles selected from olivine-type lithium metal phosphate. The present invention also provides an electrode or battery having a stable cycle characteristic at high temperature without a reduction in high-rate characteristic and capacity per weight by employing the surface-coated spinel lithium manganese oxide as a positive active material.

The spinel lithium manganese oxide is represented by Formula (1), and is further substituted with fluorine as represented by Formula (2) :

LiMₓMn₂₋ₓO₄ (1)

wherein M is at least one selected from the group consisting of Ni, Zr, Co, Mg, Mo, Al, Ti, Cr, Gd and Ag, and 0 ≤ x < 1; and

LiMₓMn₂₋ₓO_{4-z}F_{z} (2)

wherein M is at least one selected from the group consisting of Ni, Zr, Co, Mg, Mo, Al, Ti, Cr, Gd and Ag, 0 ≤ x < 1, and 0 < z < 1. The spinel lithium manganese oxide is preferably a spinel lithium nickel manganese oxide.

The olivine-type lithium metal phosphate, forming the coating layer of the spinel lithium manganese oxide, are nanoparticles, so that a structurally stable coating layer. In addition, the coating layer exhibits high thermal stability, thereby improving high-temperature cycle life characteristic and capacity per weight of electrode or battery by preventing elution of manganese ions due to a reaction between an electrolyte and spinel lithium manganese oxide during charging and discharging at high temperature and preventing a decomposition reaction of an organic electrolyte due to the elution of manganese ions.

The olivine- type lithium metal phosphate is represented by Formula (3) :

LiFe(₁₋ₓ)MnₓPO₄ (3)

wherein 0 < x < 1.

In view of structural stability and high-temperature characteristic, the olivine-type lithium metal phosphate is LiFe₍₁₊ₓ₎MnₓPO₄.

The olivine-type lithium metal phosphate are nanoparticles having a particle diameter of 100 nm or less, preferably 1 to 100 nm, more preferably 1 to 70 nm. The present invention also provides a method of preparing the positive active material. The method includes preparing a spinel lithium manganese oxide and surface-coating the spinel lithium manganese oxide.

The preparing of the spinel lithium manganese oxide comprises preparing the spinel lithium manganese oxide by mixing a lithium compound as a precursor compound represented by Formula (1) and a compound including at least one of M and manganese and performing heat treatment on the resultant mixture.

The heat treatment may be performed in an air or inert gas atmosphere at a temperature ranging from 700 to 1000 °C, preferably from 800 to 950 °C, for 5 to 24 hours. After the performing of the heat treatment, grinding or pulverizing may further be performed to control particle sizes of the spinel lithium manganese oxide while removing impurities. Examples of the lithium compound include at least one selected from the group consisting of lithium-containing hydroxide, ammonium, sulfate, alkoxide, oxalate, phosphate, halide, oxyhalide, sulfide, oxide, peroxide, acetate, nitrate, carbonate, citrate, phthalate, perchlorate, acetylacetonate, acrylate, formate, oxalate and hydrides thereof.

Examples of the compound including at least one of M and manganese include at least one selected from the group consisting of hydroxide, ammonium, sulfate, alkoxide, oxalate, phosphate, halide, oxyhalide, sulfide, oxide, peroxide, acetate, nitrate, carbonate, citrate, phthalate, perchlorate, acetylacetonate, acrylate, formate, oxalate and halide compounds and hydrides thereof.

Particle diameters of the prepared spinel lithium manganese oxide are 20 µm or less, preferably in a range of 5 to 20 µm.

The surface-coating of the spinel lithium manganese oxide includes forming a coating layer on the surface of the spinel lithium manganese oxide by mixing the spinel lithium manganese oxide with one or more types of the nanoparticles selected from olivine-type lithium metal phosphate.

The surface-coating includes dry-type mixing for 5 to 60 minutes using a ball mill or a dry-type mixer.

In the surface-coating, the one or more types of nanoparticles selected from olivine-type lithium metal phosphate and the spinel lithium manganese oxide are mixed in a ratio ranging from 1:100 to 1:25 by mass and then coated on the spinel lithium manganese oxide. When the mixing ratio is in the range stated above, a stable coating layer can be provided and the high-temperature cycle life characteristic and capacity per weight of battery can be improved.

The present invention also provides a lithium secondary battery including the positive active material.

The lithium secondary battery may include a positive electrode including a positive active material, a negative electrode, a separator and a nonaqueous electrolyte solution. Manufacturing methods of the lithium secondary battery are well known in the art to which the present invention pertains, and any method can be appropriately selected unless it deviates from the spirit and scope of the invention.

For example, the positive electrode is prepared by coating a positive active material composition including the positive active material according to the present invention and a binder on a positive electrode current collector, drying and pressing.

The binder may bind the positive active materials and fix the same to the current collector. Any binder that is used in the art to which the present invention pertains can be used without limitation. Preferably, the binder may be at least one selected from the group consisting of polyvinylidenefluoride, polytetrafluoroethylene, polyvinylchloride, polyvinylpyrrolidone, polyvinyl alcohol, carboxyl methyl cellulose (CMC), starch, hydroxypropylcellulose, polyethylene, polypropylene, styrene butadiene rubber (SBR) and fluorine rubber.

The positive active material composition may include a positive active material and a binder, optionally including a solvent such as NMP(N-Methyl-2-pyrrolidone) and olefin polymers such as polyethylene or polypropylene, and further including a filler made of a fibrous material such as glass fiber or carbon fiber. The positive active material composition may further include a conductive agent listed below in describing the negative electrode.

Examples of the positive electrode current collector may include copper, stainless steel, aluminum, nickel, titanium, sintered carbon; copper or stainless steel that is surface-treated with carbon, nickel, titanium, or silver; and aluminum-cadmium alloy and may be formed in various types, including a film, a sheet, a foil, a net, a porous body, a foamed body, a non-woven fabric body, and so on.

The negative electrode may be prepared by coating a negative active material composition including a negative active material on a negative electrode current collector, drying and pressing. The negative electrode may be formed by a lithium metal. Optionally, the negative active material composition may further include a binder and a conductive agent. The negative active material may include artificial graphite, natural graphite, graphitized carbon fiber, a carbon-based material such as amorphous carbon, lithium, alloys between lithium and silicon (Si), Al, tin (Sn), lead (Pb), Zn, bismuth (Bi), indium (In), Mg, gallium (Ga), or cadmium (Cd), an alloyable metallic compound such as Sn alloy and Al alloy, and a composite material including the metallic compound and carbon-based material. Examples of the negative electrode current collector may include copper, stainless steel, aluminum, nickel, titanium, sintered carbon; copper or stainless steel that is surface-treated with carbon, nickel, titanium, or silver; and aluminum-cadmium alloy and may be formed in various types, including a film, a sheet, a foil, a net, a porous body, a foamed body, a non-woven fabric body, and so on.

The separator is disposed between the negative electrode and the positive electrode, and may be formed using an olefin-based polymer such as polypropylene; and a sheet or non-woven fabric made of glass fiber or polyethylene. Examples of the separator may include polyethylene, polypropylene, polytetrafluoroethylene (PTFE), a multi-layered structure having two or more layers of these materials, a composite multi-layered structure such as a polyethylene/polypropylene two layered separator, a polyethylene/polypropylene/ polyethylene three layered separator, or a polypropylene/polyethylene/polypropylene three layered separator.

The nonaqueous electrolyte solution may be prepared by dissolving a lithium salt in the nonaqueous electrolyte. Examples of the lithium salt may include LiCl, LiBr, Lil, LiClO₄, LiBF₄, LiB₁₀OCl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, and chloroborane lithium.

The nonaqueous electrolyte solution may include a nonaqueous organic solvent, an organic solid electrolyte, an inorganic solid electrolyte, and so on. Examples of the nonaqueous electrolyte solution may include ethylene carbonate, propylene carbonate, butylene carbonate, vinylene carbonate, dimethyl carbonate, methylethyl carbonate, diethyl carbonate, methyl acetate, ethyl acetate, proply acetate, methyl propionate, ethyl propionate, γ-butyrolactone, 1,2-dimethoxyethane, 1,2-diethoxyethane, tetrahydrofuran, 1,2-dioxane, 2-methyltetrahydrofuran, acetonitrile, dimethylformamide, N-methyl-2-pyrrolidinone, dimethylsulfoxide, 1,3-dimethyl-2-imidazolidinone, sulforane, methyl sulforane and so on.

The organic solid electrolyte may be a gel-phase polymer electrolyte including an electrolyte solution impregnated in a polymer electrolyte such as polyethylene oxide or polyacrylonitrile.

The inorganic solid electrolyte may be nitrides, halides, or sulfates of Li, such as Li₃N, Lil, Li₅NI₂, Li₃N-LiI-LiOH, LiSiO₄, LiSiO₄-LiI-LiOH, Li₂SiS₃, Li₄SiO₄, Li₄SiO₄-LiI-LiOH, or Li₃PO₄-Li₂S-SiS₂ and so on.

The lithium secondary battery may be classified into a coin type, a prismatic type, a cylindrical type, and a pouch type. Configurations and manufacturing methods of the respective types of batteries are well known in the art and a detailed description thereof will be omitted.

The embodiments are described in more detail with reference to Examples and Comparative Examples below. The Examples and Comparative Examples are for illustrative purposes only and are not intended to limit the scope of the invention.

### [Preparation Example 1] Preparation of spinel LiNi_{0.5}Mn_{1.5}O₄

Lithium carbonate (Li₂CO₃) and nickel manganese hydroxide (Ni_{0.25}Mn_{0.75}) were homogenized in a 1:2 chemical equivalent ratio of Li with other metal, and heated under an air atmosphere at a temperature of 850°C for 24 hours to complete the preparation of having a particle diameter of approximately 12µm (Grainness D50) spinel LiNi_{0.5}Mn_{1.5}O₄ positive active material.

### [Reference Example 1]

100 g of the LiNi_{0.5}Mn_{1.5}O₄ prepared in Preparation Example 1 as a positive active material and 2 g of ZnO having a particle diameter of 100 nm or less were mixed using a dry- type powder mixer for 10 minutes and coated on a surface of the LiNi_{0.5}Mn_{1.5}O₄ active material, giving a composite active material. The composite active material, Denka Black as a conductive agent and PVDF as a binder were mixed in a ratio of 94:3:3 (mass ratio) and coated on an Al foil to manufacture an electrode plate. A thin Li ion conductive layer prepared by mixing a PEO polymer and LiClO₄ was coated on the manufactured electrode plate, followed by drying. A thickness of the coated Li ion conductive layer was controlled to be 1 µm or less. A coin- type cell was manufactured using Li metal as a negative electrode, and a mixture solution of ethylene carbonate (EC), in which 1.3M of LiPF₆ is dissolved, dimethylene carbonate (DMC) and ethylene carbonate (EC) (mass ratio of 5:3:2) as an electrolyte.

### [Reference Example 2]

A composite active material and a coin cell were manufactured in the same manner as in Reference Example 1, except that 100 g of LiNi_{0.5}Mn_{1.5}O₄ prepared in Preparation Example 1 as a positive active material and 2 g of SnO₂ having a particle diameter of 100 nm or less were used.

### [Reference Example 3]

A composite active material was manufactured in the same manner as in Reference Example 1, except that 100 g of LiNi_{0.5}Mn_{1.5}O₄ prepared in Preparation Example 1 as a positive active material and 2 g of LiFePO₄ having a particle diameter of 100 nm or less were used.

The composite active material, Denka Black as a conductive agent and PVDF as a binder were mixed in a ratio of 94:3:3 (mass ratio) and coated on an Al foil to manufacture an electrode plate. A coin-type cell was manufactured using Li metal as a negative electrode, and a mixture solution of ethylene carbonate (EC), in which 1.3M of LiPF₆ is dissolved, dimethylene carbonate (DMC) and ethylene carbonate (EC) (mass ratio of 5:3:2) as an electrolyte.

### [Reference Example 4]

A composite active material and a coin cell were manufactured in the same manner as in Reference Example 1, except that 100 g of LiNi_{0.5}Mn_{1.5}O₄ prepared in Preparation Example 1 as a positive active material and 2 g of LiMnPO₄ having a particle diameter of 100 nm or less were used.

### [Example 5]

A composite active material and a coin cell were manufactured in the same manner as in Reference Example 1, except that 100 g of LiNi_{0.5}Mn_{1.5}O₄ prepared in Preparation Example 1 positive active material and 2 g of LiFe_{0.6}Mn_{0.4}PO₄ having a particle diameter of 100 nm or less were used.

### [Comparative Example 1]

LiNi_{0.5}Mn_{1.5}O₄ prepared in Preparation Example 1 as a positive active material, Denka Black as a conductive agent and PVDF as a binder were mixed in a ratio of 94:3:3 (mass ratio) and coated on an Al foil to manufacture an electrode plate. A coin-type cell was manufactured using the manufactured electrode plate as a positive electrode, Li metal as a negative electrode, and a mixture solution of ethylene carbonate (EC), in which 1.3M of LiPF6 is dissolved, dimethylene carbonate (DMC) and ethylene carbonate (EC) (mass ratio of 5:3:2) as an electrolyte.

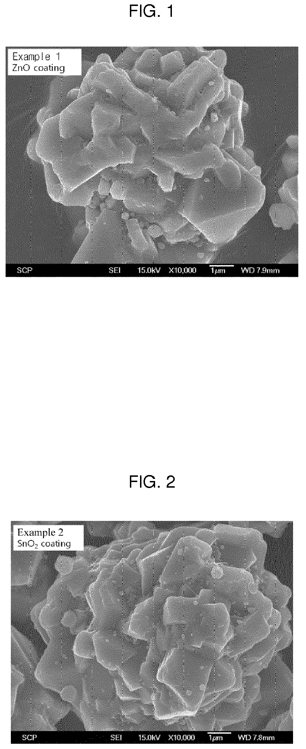

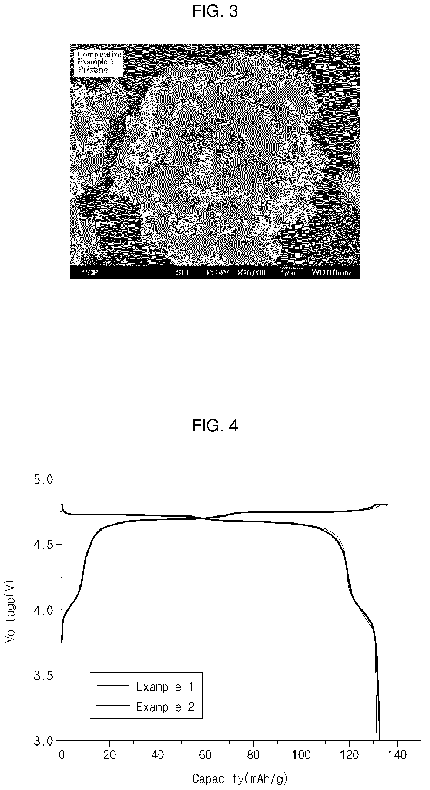

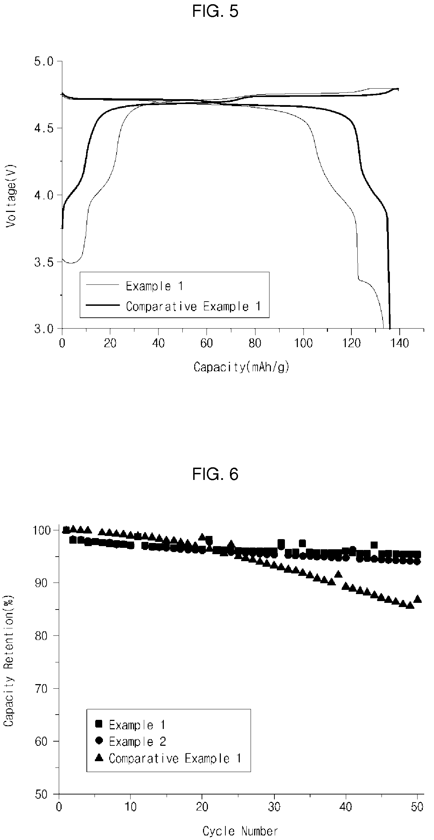

The cycle battery capacity and high-temperature (at 55°C) capacity retention of each of coin cells manufactured in Examples and Comparative Example were measured and the results thereof are shown in Table 1 and FIGS. 4 to 6. In addition, SEM views of composite active materials prepared in Examples were observed. As confirmed from the SEM views, coating layers were formed on the surface of LiNi_{0.5}Mn_{1.5}O₄ positive active material (Refer to FIGS. 1 to 3.).

**Table 1**

| | Coating material | Battery capacity (mAh/g) | Capacity retention ratio (%) @ 50 cycles, 55 °C |
|---|---|---|---|
| Ref. Example 1 | ZnO | 132 | 95% |
| Ref. Example 2 | SnO₂ | 133 | 94% |
| Ref. Example 3 | LiFePO₄ | 133 | 92% |
| Ref. Example 4 | LiMnPO₄ | 133 | 92% |
| Example 5 | LiFe_{0.6}Mn_{0.4}PO₄ | 133 | 94% |
| Comparative Example 1 | Pristine | 135 | 85% |

In Table 1, high-temperature retention ratio is a discharge capacity retention ratio (%) measured when coin cells were charged and discharged for 50 cycles at a 1 C rate at 55 °C.

As shown in Table 1, the composite active materials prepared in Reference Examples 1 to 4 and Example 5 are prepared by forming a coating layer of olivine-type lithium metal phosphate and metal oxide on LiNi_{0.5}Mn_{1.5}O₄ positive active material. The prepared composite active materials turned out to have high battery capacity and demonstrated a large increase in the high-temperature retention ratio compared to the active material without a coating layer prepared in Comparative Example 1.

## Claims

1. A positive active material comprising a spinel lithium manganese oxide surface-coated with one or more types of nanoparticles selected from olivine-type lithium metal phosphate represented by Formula (3):
LiFe(₁₋ₓ)MnₓPO₄ (3)
wherein 0 < x < 1.

2. The positive active material of claim 1, wherein the spinel lithium manganese oxide is represented by Formula (1):
LiMₓMn₂₋ₓO₄ (1)
wherein M is at least one selected from the group consisting of Ni, Zr, Co, Mg, Mo, Al, Ti, Cr, Gd and Ag, and 0 ≤ x < 1.

3. The positive active material of claim 1, wherein the spinel lithium manganese oxide is represented by Formula (2):
LiMₓMn₂₋ₓO_{4-z}F_{z} (2)
wherein M is at least one selected from the group consisting of Ni, Zr, Co, Mg, Mo, Al, Ti, Cr, Gd and Ag, 0 ≤ x < 1, and 0 < z < 1

4. The positive active material of claim 1, wherein the nanoparticles have a particle diameter of 100 nm or less.

5. A method of preparing a positive active material, the method comprising:
preparing a spinel lithium manganese oxide represented by Formula (1) by mixing a lithium compound and a compound including at least one of M and manganese and performing heat treatment on the resultant mixture; and
surface-coating the spinel lithium manganese oxide by forming a coating layer by mixing the spinel lithium manganese oxide with one or more types of nanoparticles selected from olivine-type lithium metal phosphate represented by Formula (3):
LiMₓMn₂₋ₓO₄ (1)
wherein M is at least one selected from the group consisting of Ni, Zr, Co, Mg, Mo, Al, Ti, Cr, Gd and Ag, and 0 ≤ x < 1,
LiFe(₁₋ₓ)MnₓPO₄ (3)
wherein 0 < x < 1.

6. The method of claim 7, wherein the sp.inel lithium manganese oxide is represented by Formula (2):
LiMₓMn₂₋ₓO_{4-z}F_{z} (2)
wherein M is at least one selected from the group consisting of Ni, Zr, Co, Mg, Mo, Al, Ti, Cr, Gd and Ag, 0 ≤ x < 1, and 0 < z < 1

7. The method of claim 7, wherein a mixing ratio of the nanoparticles to the spinel lithium manganese oxide ranges from 1:100 to 1:25 by mass.

8. A lithium secondary battery comprising the positive active material of claim 1.

## Patentansprüche

1. Positives Aktivmaterial, aufweisend ein Spinell-Lithium-Manganoxid, das mit einem oder mehreren Typen von Nanopartikeln ausgewählt aus Lithium-Metallphosphat vom Olivin-Typ, das durch die Formel (3) dargestellt ist, oberflächenbeschichtet wird:
LiFe(₁₋ₓ)MnₓPO₄ (3),
wobei 0 < x < 1.

2. Positives Aktivmaterial nach Anspruch 1, wobei das Spinell-Lithium-Manganoxid durch Formel (1) dargestellt ist:
LiMₓMn₂₋ₓO₄, (1),
wobei M zumindest eines ausgewählt aus der Gruppe bestehend aus Ni, Zr, Co, Mg, Mo, Al, Ti, Cr, Gd und Ag ist und 0 ≤ x < 1.

3. Positives Aktivmaterial nach Anspruch 1, wobei das Spinell-Lithium-Manganoxid durch Formel (2) dargestellt ist:
LiMₓMn₂₋ₓO_{4-z}F_{z} (2),
wobei M zumindest eines ausgewählt aus der Gruppe bestehend aus Ni, Zr, Co, Mg, Mo, Al, Ti, Cr, Gd und Ag ist, 0 ≤ x < 1 und 0 < z < 1.

4. Positives Aktivmaterial nach Anspruch 1, wobei die Nanopartikel einen Partikeldurchmesser von 100 nm oder weniger aufweisen.

5. Verfahren zur Herstellung eines positiven Aktivmaterials, wobei das Verfahren aufweist:
Herstellen eines Spinell-Lithium-Manganoxids, das durch Formel (1) dargestellt ist, durch Mischen einer Lithiumverbindung und einer Verbindung, die zumindest eines von M und Mangan aufweist, und Durchführen einer Wärmebehandlung auf der resultierenden Mischung; und Oberflächenbeschichten des Spinell-Lithium-Manganoxids durch Ausbilden einer Beschichtungsschicht durch Mischen des Spinell-Lithium-Manganoxids mit einem oder mehreren Typen von Nanopartikeln ausgewählt aus Lithium-Metallphosphat vom Olivin-Typ, das durch die Formel (3) dargestellt ist:
LiMₓMn₂₋ₓO₄ (1),
wobei M zumindest eines ausgewählt aus der Gruppe bestehend aus Ni, Zr, Co, Mg, Mo, Al, Ti, Cr, Gd und Ag ist und 0 ≤ x < 1,
LiFe(₁₋ₓ)MnₓPO₄ (3),
wobei 0 < x < 1.

6. Verfahren nach Anspruch 7, wobei das Spinell-Lithium-Manganoxid durch Formel (2) dargestellt ist;
LiMₓMn₂₋ₓO_{4-z}F_{z} (2),
wobei M zumindest eines ausgewählt aus der Gruppe bestehend aus Ni, Zr, Co, Mg, Mo, Al, Ti, Cr, Gd und Ag ist, 0 ≤ x < 1 und 0 < z < 1.

7. Verfahren nach Anspruch 7, wobei ein Massen-Mischverhältnis der Nanopartikel zum Spinell-Lithium-Manganoxid im Bereich von 1:100 bis 1:25 liegt.

8. Lithiumsekundärbatterie, aufweisend das positive Aktivmaterial nach Anspruch 1.

## Revendications

1. Matériau actif positif comprenant un oxyde de lithium et de manganèse de type spinelle revêtu en surface d'un ou de plusieurs type(s) de nanoparticules choisies du phosphate de métal lithium de type olivine représenté par la formule (3) :
LiFe₍₁₋ₓ₎MnₓPO₄ (3)
où 0 < x < 1.

2. Matériau actif positif de la revendication 1, dans lequel l'oxyde de lithium et de manganèse de type spinelle est représenté par la formule (1) :
LiMₓMn₂₋ₓO₄ (1)
où M est au moins un élément choisi dans le groupe consistant en Ni, Zr, Co, Mg, Mo, Al, Ti, Cr, Gd et Ag, et 0 ≤ x < 1.

3. Matériau actif positif de la revendication 1, dans lequel l'oxyde de lithium et de manganèse de type spinelle est représenté par la formule (2) :
LiMₓMn₂₋ₓO_{4-z}F_{z} (2)
où M est au moins un élément choisi dans le groupe consistant en Ni, Zr, Co, Mg, Mo, Al, Ti, Cr, Gd et Ag, 0 ≤ x < 1, et 0 < z < 1.

4. Matériau actif positif de la revendication 1, dans lequel les nanoparticules ont un diamètre de particule inférieur ou égal à 100 nm.

5. Procédé de préparation d'un matériau actif positif, le procédé comprenant le fait :
de préparer un oxyde de lithium et de manganèse de type spinelle représenté par la formule (1) en mélangeant un composé de lithium et un composé incluant au moins l'un du M et du manganèse et en effectuant un traitement thermique sur le mélange résultant ; et
de revêtir en surface l'oxyde de lithium et de manganèse de type spinelle en formant une couche de revêtement en mélangeant l'oxyde de lithium et de manganèse de type spinelle avec un ou plusieurs type (s) de nanoparticules choisies du phosphate de métal lithium de type olivine représenté par la formule (3) :
LiMₓMn₂₋ₓO₄ (1)
où M est au moins un élément choisi dans le groupe consistant en Ni, Zr, Co, Mg, Mo, Al, Ti, Cr, Gd et Ag, et 0 ≤ x < 1,
LiFe₍₁₋ₓ₎MnₓPO₄ (3)
où 0 < x < 1.

6. Procédé de la revendication 7, dans lequel l'oxyde de lithium et de manganèse de type spinelle est représenté par la formule (2) :
LiMₓMn₂₋ₓO_{4-z}F_{z} (2)
où M est au moins un élément choisi dans le groupe consistant en Ni, Zr, Co, Mg, Mo, Al, Ti, Cr, Gd et Ag, 0 ≤ x < 1, et 0 < z < 1

7. Procédé de la revendication 7, dans lequel le rapport de mélange des nanoparticules sur l'oxyde de lithium et de manganèse de type spinelle se trouve dans la plage allant de 1 : 100 à 1 : 25 en masse.

8. Batterie secondaire au lithium comprenant le matériau actif positif de la revendication 1.
